# EUROPEAN PATENT SPECIFICATION

(11) **EP 2 472 917 B1**
(45) Date of publication and mention of the grant of the patent: **19.03.2014**
(21) Application number: 12000011.2
(22) Date of filing: 02.01.2012
(51) Int. Cl.: H04L 29/06, H04W 4/22, H04W 76/00

(54) **Method of handling an emergency bearer service for mobile station**
Verfahren zur Handhabung eines Notrufträgerdienstes für eine mobile Station
Procédé de gestion de service de support d'urgence pour une station mobile

(30) Priority: 03.01.2011 US 201161429296 P; 27.12.2011 US 201113338192
(43) Date of publication of application: 04.07.2012
(73) Proprietor: HTC Corporation, Taoyuan County 330 (TW)
(72) Inventor: Tiwari, Kundan, Taoyuan City Taoyuan County 330 (TW)
(74) Representative: Klang, Alexander H.

(56) References cited:
- US-A1- 2009 239 554
- "3rd Generation Partnership Project; Technical Specification Group Core Network and Terminals; AT command set for User Equipment (UE) (Release 10)", 3GPP STANDARD; 3GPP TS 27.007, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.2.0, 19 December 2010 (2010-12-19) , pages 1-243, XP050462319, [retrieved on 2010-12-19]
- "3rd Generation Partnership Project; Technical Specification Group Core Network and Terminals; Mobile radio interface Layer 3 specification; Core network protocols; Stage 3 (Release 10)", 3GPP STANDARD; 3GPP TS 24.008, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 19 December 2010 (2010-12-19) , pages 1-625, XP050462277, [retrieved on 2010-12-19]
- HTC: "Addition of registeration status to CREG,CGREG, CEREG command for emergency attached UE", 3GPP DRAFT; C1-110916, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Salt Lake City; 20110221, 28 February 2011 (2011-02-28), pages 1-6, XP050480572, [retrieved on 2011-02-28]

## Description

### Background of the Invention

### 1. Field of the Invention

The present invention relates to a method used in a service system, and more particularly, to a method of handling an emergency bearer service for an attached mobile station.

### 2. Description of the Prior Art

A GSM (global system for mobile communication) system, initiated by the third generation partnership project (3GPP), is now being regarded as a new radio interface and radio network architecture that provides a high data rate, low latency, packet optimization, and improved system capacity and coverage. In the GSM system, an UMTS (universal mobile telecommunication system) includes a plurality of base stations and communicates with a plurality of mobile stations (MSs), also referred as to user equipments (UEs).

A General packet radio service (GPRS) is a packet oriented mobile data service on GSM cellular communication systems. GPRS enhances the second generation (2G) phones to enable them to send and receive data more rapidly. With a GPRS connection, the phone is "always on" and can transfer data immediately, and at higher speeds: typically 32 - 48 kbps. An additional benefit is that data can be transferred at the same time as making a voice call. GPRS is now available on most new phones. GPRS is part of a series of technologies that are designed to move the 2G networks closer to the performance of 3G (the third generation) networks. The key characteristic of a 3G network is its ability to transfer large amounts of data at high speed (up to 2 Mbps), enabling applications like video calling, video downloads, web browsing, email, etc. By increasing the speed of a 2G network, some of these applications become possible, e.g. web browsing and sending or receiving emails with large attachments.

A GPRS detach procedure is used in the following conditions: (1) to detach the IMSI for GPRS services only. Independent of the network operation mode, this procedure is used by all kind of GPRS MSs; (2) as a combined GPRS detach procedure used by GPRS MSs operating in MS operation mode A or B to detach the IMSI for GPRS and non-GPRS services or for non-GPRS services only, if the network operates in network operation mode I and no circuit-switched transaction is ongoing; (3) in the case of a network failure condition to indicate to the MS that a re-attach with successive activation of previously active PDP contexts shall be performed. In this case, the MS may also perform the procedures needed in order to activate any previously active multicast service(s); or (4) to detach the IMSI or IMEI for emergency bearer services. The attach type information element shall indicate "GPRS attach". For an MS attaching for emergency bearer services the attach type information element shall indicate "Emergency attach".

A PDP (Protocol Data Packet)context activation may be initiated by the MS or the initiation may be requested by the network. A MS attached for emergency bearer services shall only request a PDP context with request type set to "emergency". If there already is a PDN connection for emergency bearer services established, the MS shall not request an additional PDN connection for emergency bearer services. The MS shall not request emergency bearer services in A/Gb mode or in GERAN Iu mode.

According to the sub clause 6.1.3.1 of section 2 of 3GPP TS 24.008 v10.1.0, the MS attached for the emergency bearer services can't activate a PDP context for normal services. When the MS is attached for emergency bearer services at normal cell then according to section 3 of 3GPP TS 24.008 v10.1.0, the MS will send a parameter "+CGREG: 1 registered, home network" or "+CGREG: 5 registered, roaming network". In this case also application will not know that the device is attached for emergency bearer services and can't activate a PDP context for normal service. Application may try to activate a PDP context for normal service and always rejected. This will keep the radio modem busy. A similar issue also occurs when the application may query the registration status by sending a request "+CGREG?" and the MS responds the "+CGREG?" with a solicited response "+CEREG: 1, 1" or "+CEREG: 1, 5".

Moreover, the MS needs to detach and attach again to get the normal services from device attached for emergency bearer services. Currently, there is no way the application knows the device is attached for the emergency bearer services. The same issue also exists for the MS supporting S1 mode also.

Attention is drawn to US 2009/0239554 A1 describing a method and apparatus for a wireless transmit receive unit (WTRU) to receive an emergency situation notification. The method and apparatus include the WTRU receiving a paging message with an emergency situation notification, and the WTRU receiving scheduling information in a system information block.

### Summary

In accordance with the present invention a method of handling an emergency bearer service for a mobile station, and a corresponding mobile station, are provided as set forth in claims 1 and 8, respectively. Preferred embodiments are described in the dependent claims.

A method of handling an emergency bearer service for a mobile station is disclosed. The mobile station comprises a terminal adaptor and a terminal equipment. The method comprises the terminal adaptor indicating a first registration status for an emergency bearer service to the terminal equipment of the mobile station.

A mobile station is disclosed. The mobile station comprises a terminal equipment and a terminal adaptor. The terminal adaptor is coupled to the terminal equipment for indicating a first registration status for the emergency bearer service to the terminal equipment of the mobile station.

These and other objectives of the present invention will no doubt become obvious to those of ordinary skill in the art after reading the following detailed description of the preferred embodiment that is illustrated in the various figures and drawings.

### Brief Description of the Drawings

FIG. 1 illustrates a schematic diagram of an exemplary wireless communication system.
FIG.2 illustrates a schematic diagram of an exemplary communication device.
FIG.3 is a schematic diagram of a mobile station.
FIG.4 is a flow chart of an exemplary process.

### Detailed Description

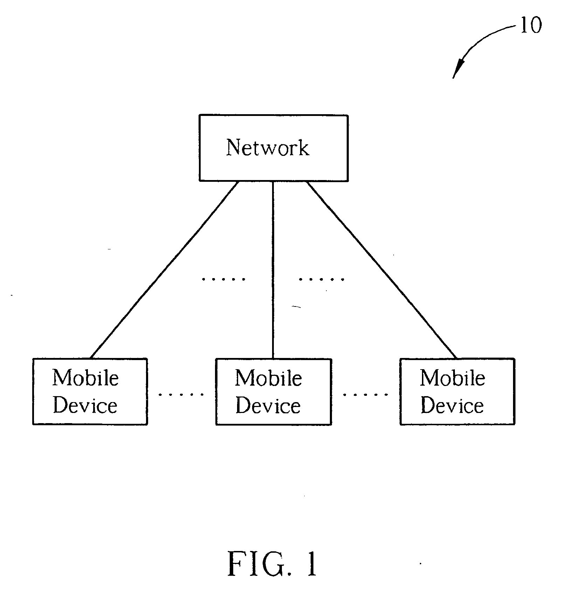

Please refer to FIG.1, which illustrates a schematic diagram of an exemplary wireless communication system 10. Briefly, the wireless communication system 10 is composed of a network and a plurality of mobile devices. The wireless communication system 10 can be a GPS (General Packet Radio Service) system, or any other similar network system such as UMTS (Universal Mobile Telecommunications System), an LTE (long-term evolution), LTE-Advance system. In GPRS system, the network is referred as a Universal Terrestrial Radio Access Network (UTRAN) comprising and a plurality of NBs (Node Bs). GPRS enables data transfers through cellular networks. It is used for mobile internet, MMS and other data communications. In theory the speed limit of GPRS is 115 kbps, but in most networks it is around 35 kbps. The mobile device is referred as to a user equipment (UEs) or a mobile station (MS) supporting the abovementioned RATs and may be a device such as mobile phones, computer systems, etc. This terminology will be used throughout the application for ease of reference, however, this should not be construed as limiting the disclosure to any one particular type of network. In some examples, the network and the MS may be seen as a transmitter or receiver according to transmission direction, e.g., for uplink (UL), the MS is the transmitter and the network is the receiver, and for downlink (DL), the network is the transmitter and the UE is the receiver.

The mobile station (MS) is considered as attached for emergency bearer in following condition: (1). When the MS has successfully performed the attach procedure with attach type "Emergency". (2). When the MS is attached HPLMN (Home Public Land Mobile Network) or VPLMN (Visited Public Land Mobile Network) on a normal cell and only has a PDN (Packet Data Network) connection for emergency bearer services. (3). When the MS attached normally had only a PDN connection for emergency bearer service and it was deactivated.

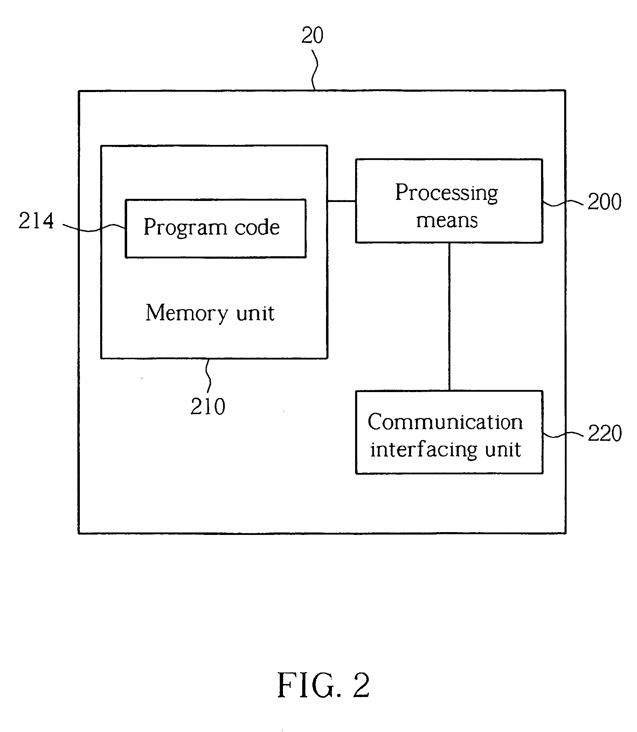

Please refer to FIG.2, which illustrates a schematic diagram of an exemplary communication device 20. The communication device 20 may be the mobile devices or the network shown in FIG. 1 and may include a processor 200 such as a microprocessor or ASIC, a memory unit 210 and a communication interfacing unit 220. The memory unit 210 may be any data storage device that can store program code 214 for access by the processor 200. Examples of the memory unit 210 include but are not limited to a subscriber identity module (SIM), read-only memory (ROM), random-access memory (RAM), CD-ROMs and optical data storage devices. The communication interfacing unit 220 may be preferably a radio transceiver and accordingly exchanges wireless signals according to processing results of the processor 200.

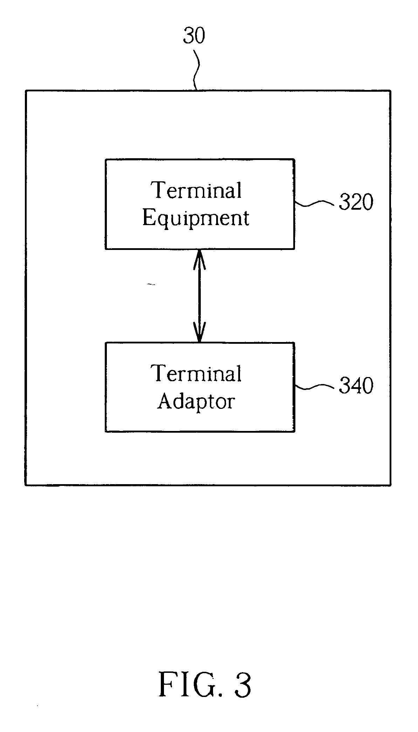

Please refer to FIG. 3, which is a schematic diagram of a mobile station 30 according to another example. The mobile station 30 may be the mobile devices shown in FIG. 1 The mobile station 30 includes a terminal adaptor 320 and terminal equipment 340. The terminal adaptor 320 can be a modem integrated in the mobile station 30 or a modem software. The terminal equipment 340 can be an application layer of the mobile station 30 (e.g. Windows or Android operation system) . The interface between terminal equipment 340 and the terminal adaptor 320 is intended to operate over existing serial (ITU-T Recommendation V.24) cables, infrared link, and all link types with similar behaviour. The modem software and application layer are preferably running on different processors. For example, the modem software is running on an ARM 9 processor and the application layer is running on an ARM 11 processor.

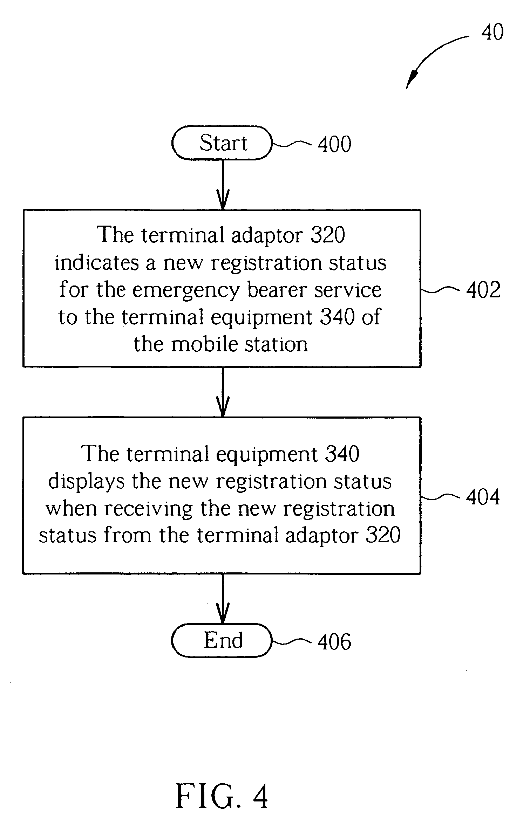

Please refer to FIG.4, which is a flow chart of an exemplary process 40. The process 40 is used for handling an emergency bearer service for a mobile station. The mobile station can be referred to as the communication device 20 or the mobile device 30. The mobile station is attached for the emergency bearer service on a normal cell. The process 40 can be complied into the program code 214 and include the following steps:

Step 400: Start.

Step 402: The terminal adaptor 320 indicates a new registration status for the emergency bearer service to the terminal equipment 340 of the mobile station.

Step 404: The terminal equipment 340 displays the new registration status when receiving the new registration status from the terminal adaptor 320.

Step 406: End.

According to the process 40, the terminal adaptor 320 (e.g. modem software/modem) indicates the new registration status to the terminal equipment 340 (e.g. Windows or Android operation system) when the mobile station is attached for the emergency bearer service. The new registration status indicates the mobile station is registered and attached for the emergency bearer service. When the terminal equipment 340 receives the response from the terminal adaptor 320, the terminal equipment 340 displays the new registration status. That is, the new registration status is used for indicating the emergency bearer service to the terminal equipment 340. When the terminal equipment 340 receives the new registration status, the terminal equipment 340 is aware of the mobile station attached for the emergency bearer service. Thus, the terminal equipment 340 does not activate a PDP context for a normal service. This can avoid the terminal adaptor 320 being busy due to registration status query from the terminal equipment 340.

In addition, the terminal adaptor 320 indicates the new registration status through a solicited response or an unsolicited response "+CREG: <stat>". Wherein, <stat> is an integer type, preferably, <stat>=6 or any new value larger than current used values 1-5. For example, when the mobile station is considered as attached for emergency bearer services, the mobile station supporting Iu mode indicates status of emergency attachment to the application layer through an unsolicited response +CGREG: 6, registered, emergency bearer services when the CGREG unsolicited response is enabled or through the solicited response when the solicited request comes. For another example, the MS supporting S1 mode indicates status of emergency attachment to the application layer e.g. through an unsolicited response +CEREG: 6, registered, emergency bearer services when the CGREG unsolicited response is enabled or through a solicited response when the solicited request comes.

On the other hand, when the mobile station is attached for a normal service, the terminal adaptor 320 indicates existing registration statuses for a normal service to the terminal equipment 340 of the mobile station. For example, the mobile station send the unsolicited response "+CGREG: 1 registered, home network" or "+CGREG: 5 registered, roaming network" for the normal service. In other words, according to the exemplary process 40, the terminal adaptor 320 indicates different registration statuses for the normal service and the emergency bearer service.

The terminal equipment 340 also displays the registration statuses differently (e.g. different wordings, icons or images) to a user according to the received registration status.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20 in which the processing means 200 processes the program code 214 related to the abovementioned processes and the processed results can handling emergency session in the wireless communications system 10.

To sum up, when the mobile station is attached for the emergency bearer service, the modem software of the mobile station indicates the different registration status to the application layer for the emergency bearer service than for the normal service. Correspondingly, the application layer displays the registration statuses differently for the emergency bearer service and the normal service. Since the application layer is informed of the emergency bearer service, the terminal equipment 340 does not activate a PDP context for a normal service. This can avoid the radio modem being busy due to registration status query from the application layer.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling an emergency bearer service for a mobile station (30), the mobile station comprising a terminal adaptor (340)and a terminal equipment (320), the method comprising:
the terminal adaptor (340) indicating (402) different registration status for the emergency bearer service and a normal service to the terminal equipment (320) of the mobile station (30).

2. The method of claim 1, wherein the mobile station (30) is attached for the emergency bearer service on a normal cell.

3. The method of claim 1, wherein the terminal adaptor (340) indicating a first registration status for the emergency bearer service to an application unit of the mobile station (30) through a response.

4. The method of claim 3, wherein the response is an unsolicited response or a solicited response.

5. The method of claim 1 further comprising the terminal adaptor (340) indicating a second registration status for a normal service to the terminal equipment (320) of the mobile station (30).

6. The method of claim 5, further comprising the terminal equipment (320) displaying the first registration status and the second registration status differently.

7. The method of claim 3, wherein an index of the first registration status is an integer greater than 5.

8. A mobile station (30) comprising:
a terminal equipment (320); and
a terminal adaptor (340) coupled to the terminal equipment (320) for indicating different registration status for an emergency bearer service and a normal service to the terminal equipment (320) of the mobile station (30).

9. The mobile station (30) of claim 8, wherein the mobile station (30) is attached for the emergency bearer service on a normal cell.

10. The mobile station (30) of claim 8, wherein the terminal adaptor (340) is further adapted to indicate a first registration status through a response.

11. The mobile station (30) of claim 10, wherein the response is an unsolicited response or a solicited response.

12. The mobile station (30) of claim 10, wherein the terminal adaptor (340) is further adapted to indicate a second registration status for a normal service to the terminal equipment of the mobile station (30).

13. The mobile station (30) of claim 12, wherein the terminal equipment (320) is adapted to display the first registration status and the second registration status differently.

14. The mobile station (30) of claim 10, wherein an index of the first registration status is an integer greater than 5.

## Patentansprüche

1. Ein Verfahren zur Handhabung eines Notfallbearerdienstes, auch Emergency Bearer Service, für eine Mobilstation (30), wobei die Mobilstation einen Engeräteadapter (340), auch Terminal Adaptor, und eine Endgeräteausrüstung (320), auch Terminal Equipment, aufweist, wobei das Verfahren Folgendes aufweist:
der Endgeräteadapter (340) zeigt (402) der Endgeräteausrüstung (320) der Mobilstation (30) unterschiedliche Registrierungsstatus für den Notfallbearerdienst und einen normalen Dienst an.

2. Verfahren nach Anspruch 1, wobei die Mobilstation (30) für den Notfallbearerdienst an einer normalen Zelle angebunden ist.

3. Verfahren nach Anspruch 1, wobei der Endgeräteadapter (340) einer Anwendungseinheit der Mobilstation (30) einen ersten Registrierungsstatus für den Notfallbearerdienst anzeigt, und zwar durch eine Antwort.

4. Verfahren nach Anspruch 3, wobei die Antwort eine nicht angeforderte, auch Unsolicited, Antwort oder eine angeforderte, auch Solicited, Antwort ist.

5. Verfahren nach Anspruch 1, das ferner Folgendes aufweist: der Endgeräte-adapter (340) zeigt der Endgeräteausrüstung (320) der Mobilstation (30) einen zweiten Registrierungsstatus für einen normalen Dienst an.

6. Verfahren nach Anspruch 5, das weiterhin Folgendes aufweist: die Endgeräteausrüstung (320) stellt den ersten Registrierungsstatus und den zweiten Registrierungsstatus unterschiedlich dar.

7. Verfahren nach Anspruch 3, wobei ein Index auf den ersten Registrierungsstatus eine ganze Zahl größer als 5 ist.

8. Eine Mobilstation (30), die Folgendes aufweist:
eine Endgeräteausrüstung (320); und
einen Endgeräteadapter (340), der an die Endgeräteausrüstung (320) angekoppelt ist, zum Anzeigen von unterschiedlichen Registrierungsstatus für einen Notfallbearerdienst, auch Emergency Bearer Service, und einen normalen Dienst an die Endgeräteausrüstung (320) der Mobilstation (30).

9. Mobilstation (30) nach Anspruch 8, wobei die Mobilstation (30) für den Notfallbearerdienst an einer normalen Zelle angebunden ist.

10. Mobilstation (30) nach Anspruch 8, wobei der Endgeräteadapter (340) ferner ausgeführt ist zum Anzeigen eines ersten Registrierungsstatus durch eine Antwort.

11. Mobilstation (30) nach Anspruch 10, wobei die Antwort eine nicht angeforderte, auch Unsolicited, Antwort oder eine angeforderte, auch Solicited, Antwort ist.

12. Mobilstation (30) nach Anspruch 10, wobei der Endgeräteadapter (340) ferner ausgeführt ist zum Anzeigen eines zweiten Registrierungsstatus für einen normalen Dienst an die Endgeräteausrüstung der Mobilstation (30).

13. Mobilstation (30) nach Anspruch 12, wobei die Endgeräteausrüstung (320) ausgeführt ist zum unterschiedlichen Darstellen des ersten Registrierungsstatus und des zweiten Registrierungsstatus.

14. Mobilstation (30) nach Anspruch 10, wobei ein Index auf den ersten Registrierungsstatus eine ganze Zahl größer als 5 ist.

## Revendications

1. Procédé de gestion d'un service support d'urgence pour un poste mobile (30), le poste mobile comprenant un adaptateur de terminal (340) et un équipement terminal (320), le procédé comprenant l'indication (402) par l'adaptateur de terminal (340) d'un état d'enregistrement différent pour le service support d'urgence et pour un service normal vers l'équipement terminal (320) du poste mobile (30).

2. Procédé selon la revendication 1, dans lequel le poste mobile (30) est lié au service support d'urgence sur une cellule normale.

3. Procédé selon la revendication 1, dans lequel l'adaptateur de terminal (340) indique un premier état d'enregistrement pour le service support d'urgence vers un module d'application du poste mobile (30) par l'intermédiaire d'une réponse.

4. Procédé selon la revendication 3, dans lequel la réponse est une réponse non sollicitée ou une réponse sollicitée.

5. Procédé selon la revendication 1, comprenant en outre le fait que l'adaptateur de terminal (340) indique un second état d'enregistrement pour un service normal vers l'équipement terminal (320) du poste mobile (30).

6. Procédé selon la revendication 5, comprenant en outre le fait que l'équipement terminal (320) affiche différemment le premier état d'enregistrement et le second état d'enregistrement.

7. Procédé selon la revendication 3, dans lequel un indice du premier état d'enregistrement est un entier supérieur à 5.

8. Poste mobile (30) comprenant :
un équipement terminal (320) ; et
un adaptateur de terminal (340) couplé à l'équipement terminal (320) pour indiquer un état d'enregistrement différent pour un service support d'urgence et pour un service normal vers l'équipement terminal (320) du poste mobile (30).

9. Poste mobile (30) selon la revendication 8, dans lequel le poste mobile (30) est lié au service support d'urgence sur une cellule normale.

10. Poste mobile (30) selon la revendication 8, dans lequel l'adaptateur de terminal (340) est en outre adapté à indiquer un premier état d'enregistrement par l'intermédiaire d'une réponse.

11. Poste mobile (30) selon la revendication 10, dans lequel la réponse est une réponse non sollicitée ou une réponse sollicitée.

12. Poste mobile (30) selon la revendication 10, dans lequel l'adaptateur de terminal (340) est en outre adapté à indiquer un second état d'enregistrement pour un service normal vers l'équipement terminal du poste mobile (30).

13. Poste mobile (30) selon la revendication 12, dans lequel l'adaptateur de terminal (340) est adapté à afficher différemment le premier état d'enregistrement et le second état d'enregistrement.

14. Poste mobile (30) selon la revendication 10, dans lequel un indice du premier état d'enregistrement est un entier supérieur à 5.
